**Europäisches Patentamt**

**European Patent Office**

**Office européen des brevets**

(11) Veröffentlichungsnummer: **0 059 454**
**B1**

(12) # EUROPÄISCHE PATENTSCHRIFT

(45) Veröffentlichungstag der Patentschrift:
08.06.88

(51) Int. Cl.⁴: **B 64 G 1/10**

(21) Anmeldenummer: **82101498.2**

(22) Anmeldetag: **26.02.82**

(54) **Fernmeldesatellitensystem mit geostationären Positionsschleifen.**

(30) Priorität: **28.02.81 DE 3107762**
**13.11.81 DE 3145207**

(43) Veröffentlichungstag der Anmeldung:
**08.09.82 Patentblatt 82/36**

(45) Bekanntmachung des Hinweises auf die Patenterteilung:
**08.06.88 Patentblatt 88/23**

(84) Benannte Vertragsstaaten:
**DE FR GB SE**

(73) Patentinhaber: **Siemens Aktiengesellschaft Berlin und München, Wittelsbacherplatz 2, D-8000 München 2 (DE)**

(72) Erfinder: **Dondl, Peter, Ing.grad., An der Fuchsenhütte 48, D-6101 Rossdorf 1 (DE)**

(56) Entgegenhaltungen:
US-A-3 340 531
US-A-3 497 807
US-A-3 836 969

RUNDFUNKTECHNISCHE MITTEILUNGEN, Vol. 19, part 2, 1975, pages 58 - 61, R. SÜVERKRÜBBE: "Fernsehübertragung über Nachrichtensatelliten" ELEKTROTECHNISCHE ZEITSCHRIFT E. T. Z., publ. B, Vol. 21B, no.13, E. K. ASCHMONEIT: "10 Jahre Nachrichtensatelliten" INERNATIONAL CONFERENCE ON MARITIME AND AERONAUTICAL SATELLITE COMMUNICATION AND NAVIGATION, 7-9 March 1978, pages 119-122, The institution of Electrical Engineers, Savoy Place, London WC2, GB, J.G. WALKER: "Satellite patterns for continuous multiple whole-earth coverage"

(56) Entgegenhaltungen: (Fortsetzung)
PROC.IEE, IEE REVIEWS, vol. 119, no. 8R, August 1972, pages 929-955 R.E.G. BACK ET AL: "Commercial satellite communication" R.M.E., vol. 41, nr. 7, 1975, pages 282-283 "Sechs Fragen nach der Zukunft der Nachrichtensatelliten" ICC '81: INTERNATIONAL CONFERENCE ON COMMUNICATIONS. Conference record, vol. 3 (81CH1648-5), June 14-18, 1981, Denver, colorado US. IEEE, NEW YORK, US. J.M. RUDDY: "A Novel non-geostationary satellite communications system" Pages 54.3.1, 54.3.2

EP 0 059 454 B1

## Beschreibung

Die Erfindung betrifft ein Fernmeldesatellitensystem mit geostationären Positionsschleifen aus gleichartigen Satelliten, die auf gegen die Äquatorialebene geneigten kreis- oder ellipsenförmigen Bahnen umlaufen.

Bei Fernmeldesatellitensystemen mit geostationären Orbitpositionen können Erdefunkstellen dauernd auf einen Satelliten bzw. auf eine Position ausgerichtet bleiben und ununterbrochen Fernmeldeverkehr abwickeln. Die unvermeidlichen geringen Positionsabweichungen des Satelliten oder der Position werden durch Nachführung der Erdefunkstellenantennen ausgeglichen.

Systeme mit geostationären Fernmeldesatelliten, die auf der geostationären Umlaufbahn in der Äquatorialebene positioniert sind, sind bekannt. Bekannt ist auch die Möglichkeit, nit Hilfe mehrerer sogenannter geosynchroner Satelliten, deren Bahnknoten auf der gleichen Orbitposition liegen, nördlich und südlich des geostationären Orbits quasi stationäre Orbitpositionen zu schaffen. Die Positionen werden gewissermaßen im Schichtbetrieb von den beteiligten Satelliten nacheinander eingenommen. Zur funktechnischen Entkopplung sind Satelliten, die zwischen den quasistationären Positionen unterwegs sind, ausgeschaltet (siehe Dokument der Internationalen Fernmeldeunion, Genf: CCIR 4/71-E vom 2.5.6. 1980). Sowohl geostationäre Satelliten als auch geosynchrone Satelliten mit Qausiposition befinden sich auf, oder aus bahn- und funktechnischen Notwendigkeiten sehr nahe dem geostationären Orbit. Die Nutzung nur dieses Gürtels um die Erde für geostationäre Fernmeldesatellitensysteme wird auf Dauer erhebliche Kapazitätsprobleme mit sich bringen. Für Länder, die weit im Norden oder weit im Süden liegen, hat der geostationäre Gürtel außerdem den Nachteil, daß durch den geringen Elevationswinkel die elektromagnetischen Wellen einen langen Weg durch die Atmosphäre zurücklegen müssen, was sich bei höheren Frequenzen negativ auf Qualität und Zuverlässigkeit der Satellitenverbindungen auswirkt. Ferner sind Systeme mit mehreren umlaufenden Fernmeldesatelliten bekannt, die zwar den Vorteil haben, nördliche und südliche Länder versorgen zu können (Molnia-Programm, Sowjetunion), die aber den Nachteil haben, daß die beteiligten Satelliten, von denen der eine den Dienst beendet und gleichzeitig der nächste seinen Dienst beginnt, beim Umschaltezeitpunkt nicht annähernd am selben Himmelpunkt stehen.

Das hat zur Folge, daß entweder die dazugehörigen Erdefunkstellen mit zwei Antennen ausgerüstet sein müssen oder der Betrieb unterbrochen werden muß.

Ein weiterer Nachteil, sowohl bei geostationären als auch bei herkömmlichen umlaufenden Satelliten, ergibt sich aus der Notwendigkeit, will man nicht erhebliche Ausfallzeiten inkaufnehmen, für jeden Satelliten einen Ersatzsatelliten in einer Bahn nahe dem Betriebssatelliten bereitzustellen.

Der Erfindung liegt die Aufgabe zugrunde, geostationäre Orbitpositionen weit im Norden und im Süden auch für hohe Frequenzen zu erschließen. Diese Aufgabe wird erfindungsgemäß durch folgende Merkmale gelöst:

a) aus der Sicht einer ortsfesten Erdefunkstelle bewegen sich alle beteiligten Satelliten in vorzugsweise zeitlich gleichen Abständen scheinbar auf der gleichen Abständen scheinbar auf der gleichen Bahn, wobei die scheinbare Bahn mehrere in gleichen Abständen um den Erdball verlaufende, einander Kreuzende bzw. berührende Schleifen enthält.

b) die Kreuzungs- bzw. Berührungspunkte der scheinbaren Bahn werden von jeweils zwei Satelliten, auf jedem der beiden Bahnäste einer, gleichzeitig durchlaufen,

c) zum Zeitpunkt des kleinsten Abstandes der beiden Satelliten zueinander wird durch ein Kontrollzentrum die Fernmeldenutzlast des die geostationäre Schleife verlassenden Satelliten inaktiviert und die des gleichzeitig in die geostationäre Schleife eintretenden Satelliten aktiviert.

Durch die Erfindung wird erreicht, daß Erdefunkstellen, die über jeweils einen Satelliten in einer der geostationären Schleifen Fernmeldeverkehr abwickeln, trotz Umschaltung auf den anderen Satelliten quasi unterbrechungsfrei im Bereich der geostationären Schleifen dauernd arbeiten können.

Ein weiterer sehr wesentlicher Vorteil des erfindungsgemäßen Fernmeldesatellitensystems ist die Möglichkeit der Beschränkung auf eine halbkugel bei gleichzeitiger Reduzierung der Anzahl der Satelliten auf die Hälfte. Ein weiterer Vorteil bei Anwendung ellipsenförmiger Bahnen ist die freie Wählbarkeit der Inklination bei gegebener Anzahl der Satelliten, wobei große Inklinationen zu großer Exzentrizität der Bahnellinsen führen. Bei Anwendung kreisförmiger Bahnen ergibt sich die Inklination durch die Anzahl der Satelliten und die vorgegebene Umlaufzeit.

Um einerseits beim Umschalten auf den anderen Satelliten einen Polarisationssprung der ausgesandten und der empfangenen elektromagnetischen Wellen zu vermeiden und andererseits die Beibehaltung der vorgesehenen Bedeckungszonen beim Schleifendurchlauf der Satelliten zu gewährleisten, werden zur weiteren Ausgestaltung der Erfindung die kennen der beteiligten Satelliten nicht, wie heute üblich, durch Einhaltung von Roll-, Nick- und Gierachse bezogen auf die tatsächlichen Satelliten bahnen, sondern entsprechend dem Empfang von linear polarisierten Baken der für die jeweiligen geostationären Schleifen zuständigen Bezugserdefunkstellen auf diese Polarisationsrichtig ausgerichtet. Um zu erreichen, daß alle beteiligten Erdefunkstellen bei Betrieb mit Frequenzwiederverwendung durch duale Kreuzpolarisation polarisationsrichtig nachgeführt werden, sind als zusätzliche Ausgestaltung der Erfindung die Erdefunkstellenantennen wie folgt gelagert: bei Ausrichtung auf die Nennposition der jeweiligen geostationären Schleife, liegt das Achsenkreuz der kardanischen Antennenanlagerung der jeweiligen Erdefunkstellen insbesondere der Bezugerdefunkstelle (siehe oben) in einer Ebene, die parallel zur Horizontalebene des Subpunktes der Schleifennennposition verläuft. Unter der Schleifennennposition (NP) wird dabei der Punkt verstanden, der halbwegs zwischen dem Scheitel (SP) und dem Kreuzungspunkt (KP) innerhalb der Schleife liegt. Azimut- und Elevationsachsen sind für die erfindungsgemäße Anwendung ungeeignet.

Die erfindugnsgemäße Antennenlagerung ist eine vorteilhafte Weiterbildung des Gegenstandes der DE-OS-2 952 317 vom speziellen Fall der Ausrichtung auf einen geostationären Satelliten auf den allgemeinen Fall einer beliebigen Nennposition, die nicht über dem Äquator liegt. Wie bei der oben genannten Patentanmeldung steht die Hauptstrahlrichtung der Antenne nicht notwendigerweise senkrecht auf den Achsen, so daß eine Schwenkbewegung um eine der Achsen den Mantel eines flachen Kegels überstreicht. Die Schwenkbewegung enthält somit auch eine rotierende Komponente um die Hauptstrahlrichtung, die den Fehler, der durch die Positionsnachführung entstehen würde, ausgleicht.

Der mit der Erfindung erzielbare Vorteil liegt in der Erschließung von geostationären Orbitpositionen weit nördlich und südlich des geostationären Orbits. Die Satelliten beschreiben aus der Sicht von nachführbaren Erdefunkstellen geschlossene Schleifen in einem kleinen Bereich. Dadurch ist dauernder, unterbrechungsfreier Fernmeldebetrieb, wie mit Satelliten im geostationären Orbit, möglich. Beim Überqueren des Äquators befinden sich die Satelliten in ihrer inaktiven Phase und üben somit keinen störenden Einfluß auf die geostationären Satelliten aus. Für nördliche bzw. südliche Versorgungsgebiete ist der Weg der Funkstrecke durch die Atmosphäre wesentlich kürzer, wodurch der Funkbetrieb insbesondere bei hohen Frequenzen (z. B. 20/30 GHz) erleichtert wird.

Gegenüber herkömmlichen Systemen mit umlaufenden Satelliten liegt der Vorteil im unterbrechungsfreien Betrieb ohne die dazugehörigen Erdefunkstellen mit zwei Antennen ausrüsten zu müssen.

Der vermeintliche Nachteil, nur die aktiven Satelliten gleichzeitig nutzen zu können, im unten Beschriebenen Beispiel die Hälfte, entpuppt sich bei näherer Betrachtung als nicht gravierend. Geostationäre Satelliten erfordern Ersatzsatelliten, um beim Ausfall des Betriebssatelliten nach einer kurzen Unterbrechungszeit den Betrieb fortsetzen zu können. In erfindungsgemäßen Systemen dagegen hat der Ausfall eines Satelliten ohne Ersatzsatellit für die geostationären Schleifen maximal Ausfallzeiten eines Schleifendurchlaufs zur Folge. Diese Zeit läßt sich sogar noch je nach Lage der Erdefunkstellen wesentlich verkürzen, indem man den folgenden Satelliten bereits aktiviert bevor er in die Schleife eintritt und umgekehrt den vorausfliegenden Satelliten über die Schleife hinaus betreibt. Diese Unterbrechung durch den defekten Satelliten tritt für jede Schleifenposition erst in Abständen von mehreren Tagen wieder auf, in unten beschriebenen Ausführungsbeispiel erst nach zwei Tagen. Vorausgesetzt diese Ausfallintervalle sind betrieblich zu verkraften, so sind Ersatzsatelliten für jeden einzelnen Betriebssatelliten nicht erforderlich. Einige Ersatzsatelliten für das ganze System auf einer oder mehreren Wartebahnen, von denen aus die Umlaufbahnen des Systems leicht zu erreichen sind, wären ausreichend.

Die Erfindung soll im folgenden an einem in der Zeichnung dargestellen Ausführungsbeispiel näher erläutert werden. Dabei zeigt

Fig. 1 die scheinbare Bahn der Satelliten eines erfindungsgemäßen Fernmeldesatellitensystems,

Fig. 2 die für einen über dem Nordpol der Erde befindlichen Beobachter erkennbaren Satellitenbahnen des Systems nach Fig. 1.

Fig. 3 die scheinbare Bahn der Satelliten eines erfindungsgemäßen Fernmeldesatellitensystems mit sechs aktiven und sechs Reservesatelliten und

Fig. 4 die für einen über dem Nordpol der Erde befindlichen Beobachter erkennbaren Satellitenbahnen des Systems nach Fig. 3

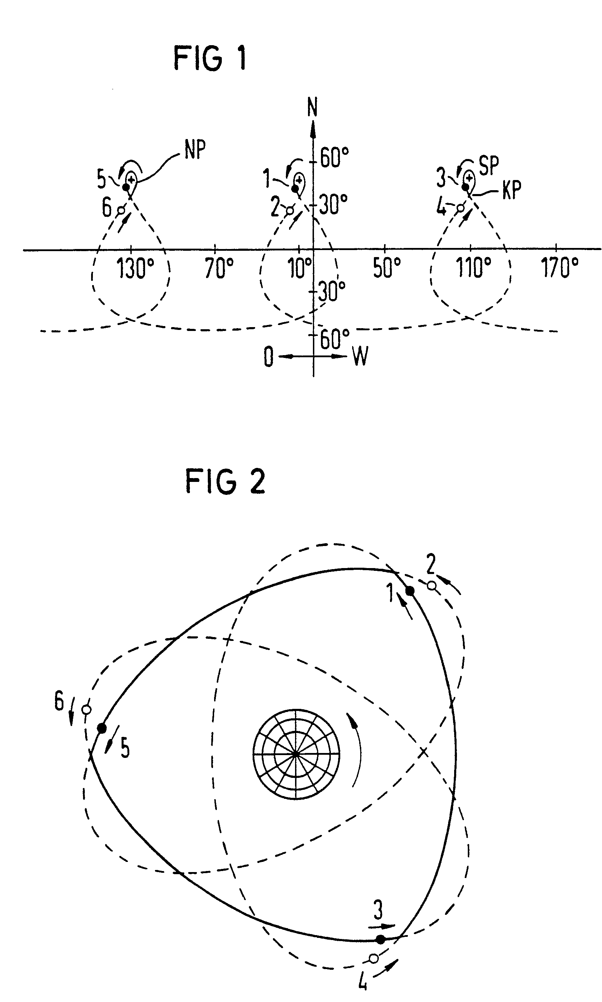

Beim Ausführungsbeispiel nach Fig. 1 befindet sich der Einfachheit halber in jedem aktiven und jedem inaktiven Bereich der scheinbaren Satellitenbahn nur ein Satellit, obwohl mehrere Satelliten in funktechnischer Hinsicht Platz hätten. Es handelt sich um ein System mit sechs gleichartigen Satelliten, von denen sich drei aktiv in ihren Schleifen befinden und die übrigen drei in inaktivem Zustand den Äquator zweimal überqueren. Die Umlaufzeit der Satelliten beträgt 2/3 der Zeit, in der sich die Erde einmal um ihre Achse dreht, also etwa 16 siderische Stunden. Der maximale Abstand von der Erdoberfläche beträgt etwa 40 000 km. Sowohl die aktiven als auch die inaktiven Intervalle entsprechen der halben Umlaufszeit, also etwa acht siderische Stunden. In diesem Ausführungsbeispiel haben die Satellitenbahnen eine Inklination von etwa 54,7°; bei 54,7° Nord liegen also auch die Scheitelpunkte (SP) der geostationären Schleifen. Die Bann kreuzt sich bei jeder Schleife (KP) etwa 35,3° nördlich des Äquators. Die Schleifen haben eine Ost-West-Breite von etwa 11,3°. Das entspricht bei 49° Nord einem Bogen von 7,4°.

Die Breitenkoordinaten der Schleifennennpositionen (NP) errechnen sich bei diesem Ausführungsbeispiel zu 45° Nord. Legt man eine Schleifennennposition ferner auf die Längenkoordinate 10° Ost (etwa über Mailand, Italien) so ergeben sich die anderen zwei Schleifennennpositionen von selbst. Diese sind in der nördlichen Hemisphäre: 130° Ost (über der Mandschurei, China) und 110° West (über dem Staat Wyoming, U.S.A.). In diesem Ausführungsbeispiel ist der ungünstigste deutsche Erdefunkstellenaufstellungsort Flensburg, wo die Antenne vom Zenit (Schleifenscheitel) bis minimal 67° Elevation (Schleifenkreuz) innerhalb von etwa acht siderischen Stunden nachgeführt werden muß. Das ist die Zeit, in der jeder Satellit eine Schleife durchläuft, vom Schleifenkreuzungspunkt entlang der Schleife zum Schleifenkreuzungspunkt zurück. Danach übernimmt der nachfolgende Satellit, der sich zum Zeitpunkt der Übernahme auch am Schleifenkreuzungspunkt aufhält, die Übertragungsaufgaben. Die Abschaltung des einen und die Einschaltung des anderen Satelliten geschieht durch dasselbe Signal der Erdefunkstelle des Kontrollzentrums. Insbesondere bei Zugriffs- bzw. Übertragungsverfahren wie TDMA (Time division multiple acces) kann der Umschaltzeitpuhkt in die Schutzzeit zwischen zwei gesendeten Paketen (Bursts) gelegt werden. Die Schutzzeit bei der Umschaltung ist so lange, daß Laufzeitunterschiede, verursacht durch etwas unterschiedliche Satellitenflughöhen, nicht zu Paketüberlappungen führen können.

Fig. 1 zeigt schematisch die scheinbaren Bahn der sechs Satelliten, die als ausgefüllte Kreise in ihren aktiven und als leere Kreise in ihren inaktiven Phasen dargestellt sind. Die Satelliten sind entsprechend ihrer zeitlichen Folge numeriert, wie sie die geostationären Schleifen durchlaufen. Waagerecht sind die geographischen Längengrade und senkrecht die geographischen Breitengrade aufgetragen. Die Buchstaben N, O und W stehen für Nord, Ost und West.

Fig. 2 stellt die tatsächlichen Bahnen der 6 Satelliten aus der Sicht eines Beobachters über dem Nordpol der Erde dar. Die Bezeichnungen entsprechen denen von Fig. 1 in der gleichen Momentaufnahme. In diesem speziellen Ausführungsbeispiel befinden sich auf jeder Ellipsenbahn 2 Satelliten mit einem zeitlichen Abstand von 8 siderischen Stunden. Das sphärische Dreieck (stark durchgehend gezeichnet) besteht aus drei 90°-Bögen, wobei jeder Bogen 120° um die Erdachse reicht. Da in den Ecken des sphärischen Dreiecks die Übertragungsaufgaben den folgenden Satelliten übergeben werden, durchwandern ununterbrochen aktive Satelliten in dreimal ca. acht siderischen Stunden das sphärische Dreieck. Während der gleichen Zeit dreht sich die Erde einmal um ihre Achse, so daß innerhalb gewisser Schwankungsbreiten dauernd ein aktiver Satellit quasi geostationär mit einer Erdefunkstelle Fernmeldebetrieb abwickeln kann.

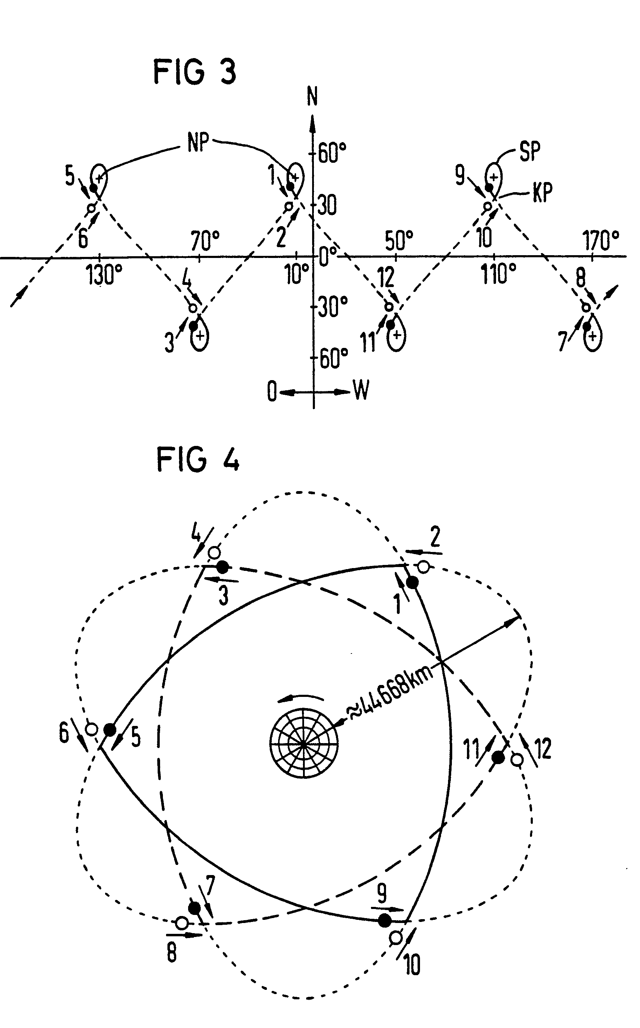

Ein weiteres Ausführungsbeispiel ist in Fig. 3 und 4 dargestellt. Der Einfachheit halber befindet sich in jedem aktiven und jedem inaktiven Bereich der scheinbaren Satellitenbahn (Fig. 3) nur ein Satellit, obwohl mehrere Satelliten in funktechnischer Hinsicht Platz hätten. Es handelt sich um ein System mit zwölf gleichartigen Satelliten, von denen sich sechs aktiv in ihren Schleifen befinden und die übrigen sechs in inaktivem Zustand den Äquator überqueren. Die Umlaufzeit der Satelliten beträgt 4/3 der Zeit, in der sich die Erde einmal um ihre Achse dreht, also etwa 32 Stunden. Der Abstand von der Erdoberfläche beträgt etwa 44 668 km. Sowohl die aktiven als auch die inaktiven Intervalle entsprechen 90° ihres Umlaufs, also etwa acht Stunden. In diesem Ausführungsbeispiel haben die Satellitenbahnen eine Inklination von etwa 54,7°; bei 54,7° Nord und Süd liegen also auch die Scheitelpunkte (SP) der geostationären Schleifen. Die Bahn kreuzt sich bei jeder Schleife (KP) etwa 35,3° nördlich und südlich des Äquators. Die Schleifen haben eine Ost-West-Breite von etwa 11,3°. Das entspricht bei 49° Nord bzw. Süd einem Bogen von 7,4°.

Die Breitenkoordinaten der Schleifennennpositionen (NP) ergeben sich bei diesem Ausführungsbeispiel zu 45° Nord bzw. Süd. Legt man eine Schleifennennposition ferner auf die Längenkoordinate 10° Ost (etwa über Mailand, Italien) so ergeben sich die anderen fünf Schleifennennpositionen von selbst. Diese sind in der nördlichen Hemisphäre: 130° Ost (über der Mandschurei, China) und 110° West (über dem Staat Wyoming, USA) und in der südlichen Hemisphäre: 70° Ost (Indischer Ozean); 50° West (Atlantischer Ozean vor der Küste Südamerikas) und 170° West (Pazifischer Ozean nahe Neuseeland). In diesem Ausführungsbeispiel ist der ungünstigste deutsche Erdefunkstellenaufstellungsort Flensburg, wo die Antenne vom Zenit (Schleifenscheitel) bis minimal 67° Elevation (Schleifenkreuz) innerhalb von etwa acht Stunden nachgeführt werden muß. Das ist die Zeit, in der jeder Satellit eine Schleife durchläuft vom Schleifenkreuzungspunkt entlang der Schleife zum Schleifenkreuzungspunkt zurück. Danach übernimmt der nachfolgende Satellit, der sich zum Zeitpunkt der Übernahme auch am Schleifenkreuzungspunkt aufhält, die Übertragungsaufgaben. Die Abschaltung des einen und die Einschaltung des anderen Satelliten geschieht durch dasselbe Signal der Erdefunkstelle des Kontrollzentrums. Insbesondere bei Zugriffs- bzw. Übertragungsverfahren wie TDMA (time division multiple access) kann der Umschaltzeitpunkt in die Schutzzeit zwischen zwei gesendeten Paketen (Bursts) gelegt werden. Die Schutzzeit bei der Umschaltung ist so lang, daß Laufzeitunterschiede, verursacht durch etwas unterschiedliche Satellitenflughöhen, nicht zu Paketüberlappungen führen können.

Fig. 3 zeigt schematisch die scheinbare Bahn der zwölf Satelliten, die als ausgefüllte Kreise in ihren aktiven und als leere Kreise in ihren inaktiven Phasen dargestellt sind. Die Satelliten sind entsprechend ihrer zeitlichen Folge numeriert, wie sie die geostationären Schleifen durchlaufen. Waagerecht sind die geografischen Längengrade und senkrecht die geografischen Breitengrade aufgetragen. Die Buchstaben N, O und W stehen für Nord, Ost und West.

Fig. 4 stellt die tatsächlichen Bahnen der zwölf Satelliten aus der Sicht eines Beobachters über dem Nordpol der Erde dar. Die Bezeichnungen entsprechen denen von Fig. 1 in der gleichen Momentaufnahme. In diesem speziellen Ausführungsbeispiel befinden sich auf jeder Kreisbahn vier Satelliten um jeweils 90° auf der eigenen Kreisbahn versetzt. Das nördliche sphärische Dreieck (stark durchgehend gezeichnet) besteht aus drei 90°-Bögen, wobei jeder Bogen 120° um die Erdachse reicht.

Das gleiche gilt auch für das südliche sphärische Dreieck, das stark und unterbrochen gezeichnet ist. Der Umlauf eines jeden Satelliten dauert etwa 32 Stunden; 90° davon werden also in etwa acht Stunden zurückgelegt. Da in den Ecken der sphärischen Dreiecke die Übertragungsaufgaben den folgenden Satelliten übergeben werden, durchwandern ununterbrochen aktive Satelliten in dreimal etwa acht Stunden die sphärischen Dreiecke. Während der gleichen Zeit dreht sich die Erde einmal um ihre Achse, so daß innerhalb gewisser Schwankungsbreiten dauernd ein aktiver Satellit quasi geostationär mit einer Erdefunkstelle Fernmeldebetrieb abwickeln kann.

**Patentansprüche**

1. Fernmeldesatellitensystem mit geostationären Positionsschleifen aus gleichartigen Satelliten die auf gegen die Äquatorialebene geneigten, kreis- oder ellipsenförmigen Bahnen umlaufen gekennzeichnet durch folgende Merkmale:

a) aus der Sicht einer ortsfesten Erdefunkstelle bewegen sich alle beteiligten Satelliten in vorzugsweise zeitlich gleichen Abständen scheinbar auf der gleichen Bahn, wobei die scheinbare Bahn mehrere in gleichen Abständen um den Erdball verlaufende, einander kreuzende bzw. berührende Schleifen enthält (Fig. 1),

b) die Kreuzungs- bzw. Berührungspunkte (KP) der scheinbaren Bahn werden von jeweils zwei Satelliten (z. B. 1 und 2), auf jedem der beiden Bahnäste einer, gleichzeitig durchlaufen,

c) zum Zeitpunkt des kleinsten Abstandes der beiden Satelliten zueinander (in KP) wird durch ein Kontrollzentrum die Fernmeldenutzlast des die geosationäre Schleife verlassenden Satelliten (z. B. 1) inaktiviert und die des gleichzeitig in die geostationäre Schleife eintretenden Satelliten (z. B. 2) aktiviert (Fig. 1 und 2).

2. Fernmeldesatellitensystem nach Anspruch 1, dadurch gekennzeichnet, daß die Antennen der beteiligten Erdefunkstellen bei Betrieb mit Frequenzwiederverwendung durch duale Kreuzpolarisation in Achsenkreuzen gelagert sind, deren beide Achsen bei Ausrichtung auf die Nennposition (NP) der jeweiligen Schleifen in jeweils parallel zur Horizontalen des Subpunktes der Schleifennennposition (NP) verlaufenden Ebenen liegen, wobei die jeweilige Schleifennennposition (NP) zwischen dem Scheitel- (SP) und Kreuzungspunkt (KP) innerhalb der Schleife liegt und die Hauptstrahlungsachse der Erdefunkstellenantenne in der Regel nicht senkrecht auf den Nachführungsachsen des Achsenkreuzes steht.

**Claims**

1. Telecommunication satellite system with geostationary position loops of similar satellites which orbit in circular or elliptical orbits which are inclined with respect to the equatorial plane, characterized by the following features:

a) from the viewpoint of a stationary ground communication station, all satellites involved move at preferably the same time intervals apparently along the same track, the apparent track containing several loops which extend at equal distances around the globe and which intersect or contact one another (Figure 1),

b) the intersection or contact points (KP) of the apparent track are simultaneously passed by in each case two satellites (for example 1 and 2), one on each of the two track limbs,

c) at the time of the shortest distance between the two satellites (in KP), the communication payload of the satellite leaving the geostationary loop (for example 1) is deactivated by a control centre and that of the satellite simultaneously entering the geostationary loop (for example 2) is activated (Figure 1 and 2).

2. Telecommunication satellite system according to Claim 1, characterized in that, when operating with frequency reutilization by means of dual cross-polarizarion, the antennae of the ground communication stations involved are mounted, in coordinate systems the two axes of which, when aligned towards the nominal position (NP) of the respective loop, are located in planes which are in each case parallel to the horizontal of the subsatellite point of the nominal loop position (NP), the respective nominal loop position (NP) being located between the apex (SP) and intersection point (KP) within the loop and the main beam axis of the ground communication station antenna, as a rule, is not perpendicular to the tracking axes of the coordinate system.

**Revendications**

1. Système de satellites de télécommunications comportant des boucles de position géostationnaires et incluant des satellites identiques qui circulent selon des trajectoires circulaires ou elliptiques inclinées par rapport au plan équatorial, caractérisé par les caractéristiques suivantes

a) vus à partir d'une station radioélectrique terrestre fixe, tous les satellites participants se déplacent de façon apparente sur la même trajectoire à des intervalles de préférence identiques dans.le temps, la trajectoire apparente comprenant plusieurs boucles situées à des distances identiques autour du globe terrestre et se croisant ou se touchant mutuellement (figure 1),

b) les points de croisement ou de contact (KP) de la trajectoire apparente sont franchis simultanément par deux satellites respectifs (par exemple 1 et 2), un sur chacune des deux branches d'une trajectoire,

c) à l'instant où la distance entre les deux satellites est la plus faible (en KP), la charge utile de télécommunications du satellite (par exemple 1), qui quitte la boucle géostationnaire, est rendue inactive à partir d'un centre de contrôle tandis que les satellites, (par exemple 2), qui apparaissent simultanément dans la boucle géostationnaire, sont activés par ce centre (figures 1 et 2).

2. Système de satellites de télécommunications suivant la revendication 1, caractérisé par le fait que les antennes des stations radioélectriques terrestres participantes sont orientées, dans le cas d'un fonctionnement avec une réutilisation des fréquences au moyen d'une polarisation croisée double, dans des systèmes de coordonnées, dont les deux axes sont situés, dans le cas de l'alignement sur la position nominale (NP) de la boucle respective, dans des plans respectivement parallèles à l'horizontale passant par le point de trace au sol de la position nominale respective de boucle (NP), auquel cas la position nominale respective de boucle (NP) se situe entre le point sommital (SP) et le point de croisement (KP) à l'intérieur de la boucle, et l'axe de rayonnement principal de l'antenne de la station radioélectrique terrestre n'est en général pas perpendiculaire aux axes d'asservissement du système de coordonnées.

# FIG 1

# FIG 2

# FIG 3

# FIG 4

≈44668km